# FASCICULE DE BREVET EUROPEEN

(11) **EP 3 024 643 B1**
(45) Date de publication et mention de la délivrance du brevet: **20.09.2017**
(21) Numéro de dépôt: 14744051.5
(22) Date de dépôt: 22.07.2014
(51) Int. Cl.: B29D 30/06, B29C 33/20

(54) **MOULE ET PROCÉDÉ POUR LA VULCANISATION DE PNEUMATIQUES**
REIFENFORM UND VERFAHREN ZUM REIFENVULKANISIEREN
MOULD AND METHOD OF VULCANIZING TYRES

(30) Priorité: 22.07.2013 FR 1357206
(43) Date de publication de la demande: 01.06.2016
(73) Titulaire: Compagnie Générale des Etablissements Michelin, 63000 Clermont-Ferrand (FR)
(72) Inventeur: MARCHADIER, Denis, F-63040 Clermont-Ferrand Cedex 9 (FR); PETRINA, Tom, Greenville, South Carolina 29605 (US); STRINGER, David, Greenville, South Carolina 29605 (US); OWEN, Marvin, Greenville, South Carolina 29605 (US)
(74) Mandataire: Noel, Luminita
(86) Numéro de dépôt international: PCT/EP2014/065756
(87) Numéro de publication internationale: WO 2015/011157

(56) Documents cités:
- EP-A1- 0 522 374
- JP-A- 2005 246 803
- JP-A- 2010 076 344
- US-A1- 2008 191 389
- US-A1- 2010 140 847

## Description

La présente invention se rapporte aux moules de vulcanisation pour pneumatiques, et plus précisément aux moules du type à secteurs. Les moules de vulcanisation assurent la vulcanisation du pneumatique par une mise sous pression et un apport de calories à une ébauche de pneumatique. Les moules de vulcanisation du type à secteurs sont réalisés en plusieurs pièces assemblées et animées par une cinématique appropriée en relation avec la presse de cuisson.

Les moules de vulcanisation comprennent généralement des secteurs mobiles radialement par rapport à l'axe du moule. Dans un tel moule de vulcanisation, l'espace de moulage de la surface extérieure du pneumatique est défini par deux coquilles, assurant chacune le moulage d'un flanc, et par une couronne de secteurs ou deux couronnes de demi secteurs assurant le moulage de la bande de roulement. Dans les moules de vulcanisation à secteurs mobiles radialement, les secteurs sont entraînés en un mouvement radial le plus souvent par le mouvement axial d'une pièce inclinée, en général une couronne de fermeture ayant une surface intérieure de forme tronconique qui coopère avec la surface radialement extérieure de forme tronconique des secteurs.

Pendant la vulcanisation, l'ébauche de pneumatique est soumise à certaines conditions de pression et de température faisant que le mélange de caoutchouc cru devient fluide. Afin d'empêcher la formation des bavures de moulage, les plans de joints doivent rester étanches. La garniture servant à mouler la bande de roulement est généralement réalisée en un alliage d'aluminium par des techniques de fonderie. Lors du serrage du moule dans la presse de vulcanisation pour assurer la fermeture des secteurs, surtout en cas d'effort de serrage trop importants, on constate l'apparition des écrasements au niveau des interfaces en aluminium des garnitures et des coquilles en acier. Les garnitures en aluminium étant moins résistantes que les coquilles, un écrasement de celles-ci provoque une dégradation du moule, avec pour conséquences, une diminution de sa durée de vie, voire même des problèmes de conformité des pneus obtenus avec ce moule.

Le document EP 0522374 au nom de l'une des demanderesses traite du problème d'étanchéité entre les secteurs et propose un moule composé de deux coquilles et d'une couronne de secteurs, chaque secteur comportant un support et une garniture de moulage, et dans lequel la garniture de moulage est fixée au support par des joncs en arc de cercle prenant appui chacun sur l'une des extrémités du support. Ainsi, en position de fermeture du moule, les secteurs sont en contact les uns avec les autres via les joncs qui assurent également le contact entre les secteurs et les coquilles, les joncs étant en compression élastique par leur appui les uns sur les autres. Ce document apporte certes une solution au problème d'étanchéité entre les secteurs, mais nécessite, pour que le moule soit étanche au niveau des joints de moulage, une adaptation des garnitures au périmètre formé par les joncs de fixation de celles-ci. Cette adaptation se fait par un raccourcissement en périmètre de l'ensemble des garnitures de moulage lors de la première fermeture du moule, ce qui impose une déformation rémanente des garnitures, avec, lorsque les tolérances de fabrication sont trop importantes, des tensions rémanentes dans les garnitures. De surcroît, cette solution nécessite l'utilisation de joncs qui sont des pièces moulantes additionnelles qui permettent de contrer les efforts de la presse afin de limiter l'écrasement des garnitures en aluminium et donc la diminution en diamètre du moule générée pour garantir l'étanchéité des secteurs. Ces joncs constituent donc des interfaces supplémentaires dans la zone de moulage du pneu et nécessitent une grande précision d'exécution au risque de laisser apparaître des bavures de gomme.

Une solution a été décrite dans le document JP 2010-076344 dans lequel un jeu circonférentiel a été prévu entre les secteurs adjacents pour compenser leur dilatation.

Un objectif de l'invention est de remédier aux inconvénients des documents précités et d'apporter une solution originale pour permettre d'améliorer la durée de vie du moule, ainsi que la qualité des pneus obtenus avec ce moule.

Cet objectif est atteint par l'invention, comme définie dans la revendication 1, qui propose un moule de vulcanisation pour pneumatique apte à coopérer avec une presse de cuisson, ledit moule comportant deux coquilles assurant chacune le moulage d'un flanc du pneumatique et une couronne de secteurs assurant le moulage de la bande de roulement du pneumatique, chaque secteur comportant un support et une garniture de moulage située radialement à l'intérieur du support, couronne dont les secteurs sont, en position de fermeture du moule, tous en contact circonférentiel deux à deux via les garnitures de moulage et en contact radial sur les coquilles par les extrémités frontales des garnitures qui forment chacune une face de contact avec la coquille, lesdits supports et garnitures étant réalisés de manière à ce que, chaque support soit apte à reprendre l'effort de serrage appliqué à la garniture venant en contact avec la coquille en position de fermeture du moule lorsque ledit effort de serrage au niveau de ladite face de contact dépasse un seuil donné, mais qui est inférieur au seuil de plasticité de ladite garniture, caractérisé en ce que un jeu prédéterminé est prévu entre la face frontale inférieure de la coquille et l'extrémité frontale inférieure du support et en ce que ce jeu est annulé en position de fermeture du moule.

Autrement dit, on réalise les supports et garnitures de l'invention de manière à ce que, lorsque l'extrémité frontale de la garniture vient en contact avec la coquille, mais avant l'application de l'effort de serrage au niveau de ladite face de contact, un jeu prédéterminé est prévu entre la face frontale inférieure de la coquille et l'extrémité frontale inférieure du support. Ce jeu est ensuite annulé en position de fermeture du moule lors de l'application de l'effort de serrage en provenance de la presse. La garniture subit alors une déformation élastique après sa mise en contact avec la coquille pour refermer les joints de moulage. Ainsi, on limite au domaine élastique sa déformation au niveau de l'interface avec la coquille, de manière à ce que l'effort de serrage qui est appliqué par la suite pour fermer complétement le moule soit encaissé par le support. On évite ainsi l'apparition des bavures sur la garniture et donc des défauts sur les pneus après vulcanisation, ce qui fait que l'on peut vulcaniser un nombre plus important de pneus avec le moule de l'invention.

Par position de fermeture du moule on comprend la position de fermeture complète du moule qui est prêt à vulcaniser le pneu qu'il enferme. Par jeu prévu entre la coquille et le support ou entre les faces latérales de deux supports on comprend le jeu fait directement avec le support ou avec une pièce rapportée et solidaire de celui-ci. Les jeux sont déterminés en fonction de conditions de travail du moule, des dimensions des pièces le composant, de leur matériau et des efforts de serrage appliqués. Ainsi, lorsque ce jeu prédéterminé est annulé, les efforts de serrage sont repris au niveau du support, faisant que la garniture est moins sollicitée, ce qui lui permet de réaliser un moulage de bonne qualité du pneu.

Selon un premier mode de réalisation de l'invention, ledit support comporte une extrémité frontale inférieure située dans le prolongement de l'extrémité frontale de la garniture, ladite extrémité frontale inférieure étant réalisée de manière à venir en contact avec la face frontale inférieure de la coquille lorsque l'effort de serrage au niveau de ladite face de contact dépasse un seuil donné. Ceci permet une réalisation simplifiée, sans ajout de pièces supplémentaires au moule.

Avantageusement, le support est réalisé en un matériau qui a une résistance à la compression supérieure à celle du matériau de la garniture. Ceci permet, pour des surfaces de contact équivalentes des deux pièces du moule, de faire reprendre les efforts de serrage lors de la fermeture du moule par le support, tout en évitant ses déformations.

Selon un deuxième mode de réalisation de l'invention, chaque support comporte un segment et des moyens de fixation dudit segment sur ledit support. Ceci permet de réaliser un secteur de manière plus économique, uniquement le segment étant usiné de manière à satisfaire la condition de jeu d'assemblage « j » prédéterminé avec la coquille.

De préférence, chaque segment présente une face frontale inférieure réalisée de manière à venir en contact avec la face frontale inférieure de la coquille lorsque l'effort de serrage au niveau de ladite face de contact dépasse un seuil donné. Selon ce mode de réalisation, les segments reprennent les efforts de serrage par un bouclage radial, sans toutefois participer au moulage du pneu.

Avantageusement, un jeu radial « j » est prévu entre la coquille et l'extrémité frontale inférieure du support ou entre la coquille et la face frontale inférieure du segment, jeu qui est compris entre 0,05 et 0,1mm. Les valeurs du jeu ont été déterminées en tenant compte des matériaux des différentes pièces du moule, de leurs dilatations et de leurs tolérances de fabrication pour une gamme de pneus donnée et des efforts de serrage appliqués. Ces valeurs ont été confirmées par des tests effectués en laboratoire. De préférence, pour un moule utilisé pour vulcaniser un pneu de tourisme ou camionnette, ce jeu est de préférence égal à 0,07mm.

Le but de l'invention est également atteint avec un procédé de vulcanisation de pneumatique comme défini dans la revendication 7, à l'aide d'un moule de l'invention, ledit moule comportant deux coquilles assurant chacune le moulage d'un flanc du pneumatique et une couronne de secteurs assurant le moulage de la bande de roulement du pneumatique, chaque secteur comportant un support et une garniture de moulage située radialement à l'intérieur du support, couronne dont les secteurs sont, en position de fermeture du moule, tous en contact deux à deux dans le sens circonférentiel via les garnitures de moulage et en contact sur les coquilles par leurs extrémités frontales, ledit moule étant apte à coopérer avec une presse de cuisson pour passer d'une position d'ouverture du moule où les secteurs sont éloignés entre eux et éloignés des coquilles à ladite position de fermeture du moule, caractérisé en ce que la fermeture du moule est réalisée en deux étapes :
- une première étape de mise en contact de la face frontale de la garniture avec la face frontale de la coquille;
- une deuxième étape d'application de l'effort de serrage dans laquelle la garniture est comprimée élastiquement et permet la reprise de l'effort par le support, un jeu prédéterminé étant prévu entre la face frontale inférieure de la coquille et l'extrémité frontale inférieure du support, ce jeu étant annulé en position de fermeture du moule.

L'invention sera mieux comprise grâce à la suite de la description, qui s'appuie sur les figures suivantes :
- la figure 1 est une vue en coupe méridienne partielle d'un moule selon l'état de la technique,
- la figure 2 est une vue en coupe méridienne partielle d'un moule selon un premier mode de réalisation de l'invention,
- la figure 3a est une vue en coupe méridienne partielle d'un moule selon un deuxième mode de réalisation de l'invention et la figure 3b est une vue partielle en coupe réalisée avec le plan A-A de la figure 3 a.

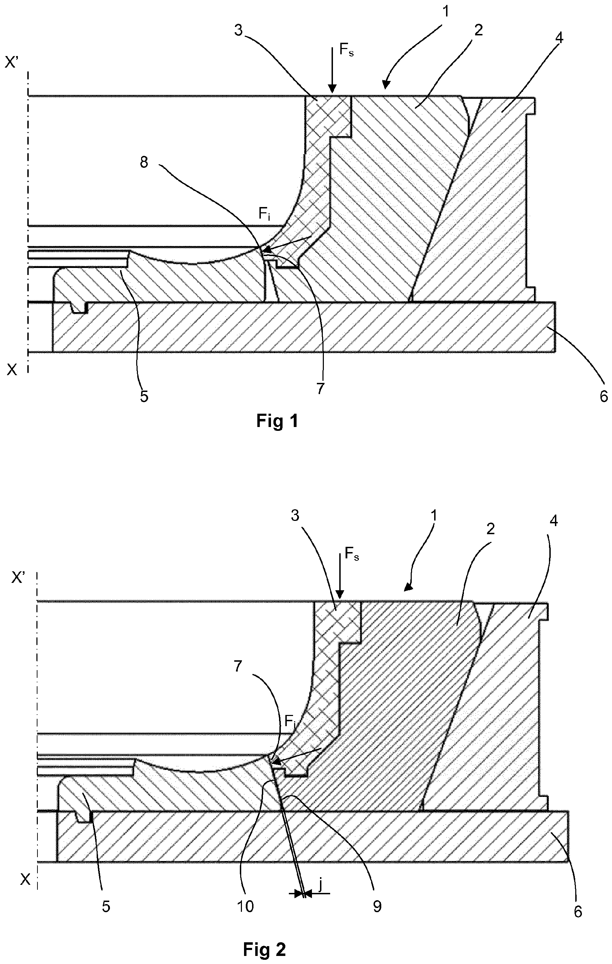

Sur les différentes figures, les éléments identiques ou similaires portent la même référence. Leur description n'est donc pas systématiquement reprise. Les figures 1, 2, et 3a illustrent, par des vues en coupe méridienne, uniquement la moitié inférieure d'un moule. Il est connu dans l'état de la technique que la moitié supérieure est l'image en miroir de la moitié inférieure. Ainsi, la description qui suit s'applique de la même manière à la moitié supérieure et à la moitié inférieure du moule.

Les figures 1 à 3b illustrent par des vues en coupe partielle un moule de vulcanisation où l'on voit un secteur 1 qui comporte un support 2, réalisé généralement en acier ou en fonte et une garniture de moulage 3 qui est fixée au support 2. La garniture de moulage 3 est en général réalisée en un alliage d'aluminium par une technique de fonderie et porte le négatif de la sculpture de la bande de roulement du pneumatique. De manière connue, plusieurs secteurs 1 sont agencés côté à côte circonférentiellement autour de l'axe de symétrie X-X' du moule et forment un anneau, les secteurs étant mobiles radialement lorsqu'ils sont actionnés par une couronne 4. La couronne 4 a une surface radialement intérieure de forme tronconique qui coopère avec la surface radialement extérieure de forme tronconique des secteurs 1. Ainsi, chaque secteur 1 est mobile radialement lorsqu'il glisse le long des surfaces inclinées de la couronne 4 entre une position radialement intérieure de fermeture du moule et une position radialement extérieure d'ouverture du moule. Les secteurs 1 sont guidés et maintenus sur la couronne 4 grâce à des outillages du type décrits dans le document WO 2010019134, non représentés ici. En position de fermeture, la garniture 3 vient au contact de la coquille 5 de moulage du flanc de pneumatique. La coquille 5 et la couronne 4 sont supportées par un plateau 6 qui sert d'interface avec la presse de cuisson (non représentée).

A la figure 1, où l'on a représenté par une vue en coupe méridienne un moule de vulcanisation selon l'état de la technique, on observe la garniture 3 qui est en contact avec la coquille 5 sur une surface légèrement conique dont la hauteur est donnée par celle de l'extrémité frontale 7 de la garniture 3. Lors du serrage du moule dans la presse de cuisson, un effort de serrage Fₛ est appliqué au secteur 1 et sa composante Fᵢ est appliquée à l'extrémité frontale de la garniture 3 en appui sur la coquille 5. Lorsque l'effort appliqué est trop important ou que les tolérances de fabrication des pièces ne sont pas adaptées, la fermeture du moule produit un écrasement de l'interface de la garniture 3 ayant pour conséquence l'apparition de bavures dues aux empreintes laissées par le rebord supérieur 8 de la coquille 5 sur l'extrémité frontale 7 de la garniture 3.

Selon l'invention, lesdits supports 1 et garnitures 3 sont réalisés de manière à ce que chaque support 1 soit apte à reprendre l'effort de serrage appliqué à la garniture 3 venant en contact avec la coquille 5 en position de fermeture du moule lorsque l'effort de serrage Fᵢ au niveau de la face de contact de l'extrémité frontale 7 de la garniture sur la coquille 5 dépasse un seuil donné. Ce seuil de l'effort est inférieur au seuil de plasticité de la garniture afin d'éviter l'apparition des déformations rémanentes sur celle-ci. Après des tests en laboratoire, pour une garniture 3 réalisée en un alliage d'aluminium fonctionnant dans des plages de température comprises entre 150 et 180°C, il a été convenu de réduire la limite élastique Re de 45% et de réduire le module d'élasticité E de 20%, et obtenir ainsi une valeur seuil de la limite élastique Re de 44MPa et une valeur seuil du module E de 58000MPa.

La figure 2 illustre un premier mode de réalisation de l'invention selon lequel le support 2 comporte une extrémité frontale inférieure 9 située dans le prolongement de l'extrémité frontale 7 de la garniture 3, ladite extrémité frontale inférieure 9 étant réalisée de manière à venir en contact avec la face frontale inférieure 10 de la coquille 5 lorsque l'effort de serrage Fᵢ au niveau de l'interface (ou face de contact) entre la garniture 3 et la coquille 5 dépasse un seuil donné. Plus particulièrement selon ce mode de réalisation, un jeu radial «j » est réalisé entre la face frontale inférieure 10 de la coquille 5 et l'extrémité frontale inférieure 9 du support 2.

Après avoir effectué des calculs de résistance des matériaux et défini les chaines de côtes nécessaires (en tenant compte de tolérances de réalisation des pièces et de dilatations différentielles entre les pièces du moule, pour une garniture 3 réalisée en un alliage d'aluminium et un support 2 réalisé en acier), il a été établi que pour un jeu j=0,07 mm la déformation de la garniture 3 reste dans le domaine élastique et le support 2 reprend les efforts de serrage à l'interface. Des tests réalisés en laboratoire ont confirmés que la solution proposée était apte à reprendre les différentes valeurs de l'effort de serrage appliqués aux moules de vulcanisation des pneus de tourisme et camionnette. Ainsi, en fonctionnement, la garniture vient la première en contact avec la coquille, elle se comprime, mais ses déformations restent dans le domaine élastique lors de l'application de l'effort de serrage en provenance de la presse de cuisson. L'écrasement élastique de la garniture 3 à l'interface avec la coquille 5 parvient à annuler le jeu «j » permettant au support 2 de reprendre l'effort de serrage par un bouclage radial.

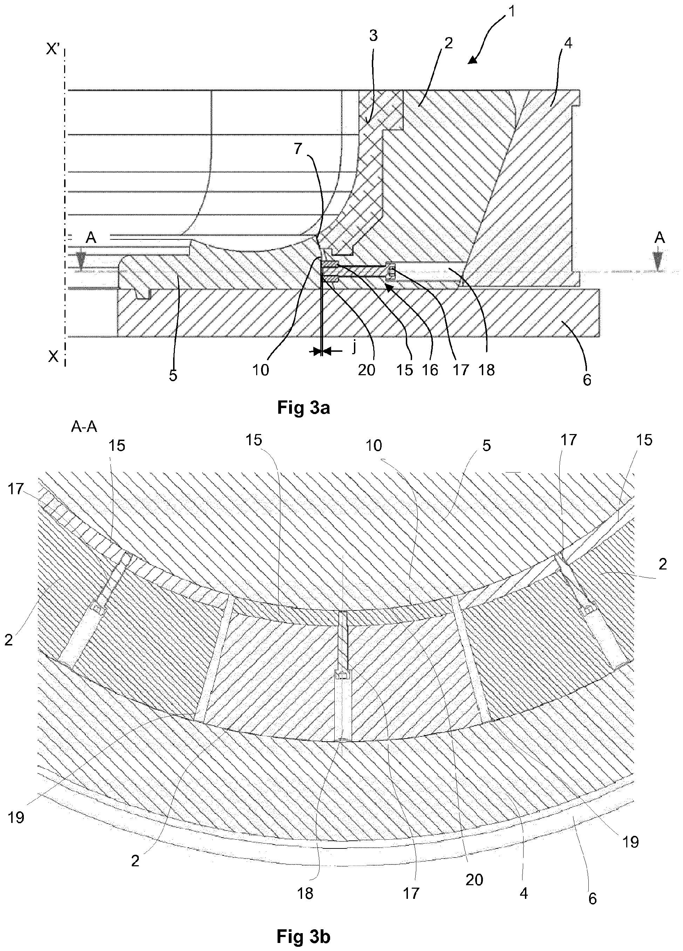

Les figures 3a et 3b illustrent un deuxième mode de réalisation de l'invention. Chaque support 2 comporte un segment 15 et des moyens de fixation 16 du segment 15 sur le support 2. Les moyens de fixation 16 sont constitués par une tige filetée 17 qui traverse avec jeu un trou 18 pratiqué dans la partie médiane du support 2 (au milieu de l'arc que constitue le support 2) et vient se visser dans un trou fileté du segment 15. Selon les dimensions du support 2, plusieurs fixations utilisant des tiges filetés 17 sont prévues pour la fixation du segment 15. Le segment 15 a une forme générale en arc de cercle (fig. 3b) et comporte une face frontale 20 réalisée de manière à venir en contact avec la face frontale inférieure 10 de la coquille 5 lorsque l'effort de serrage Fᵢ au niveau de l'interface (ou face de contact) entre la garniture 3 et la coquille 5 dépasse un seuil donné. Plus particulièrement, comme dans le mode de réalisation de la figure 2, un jeu « j » est réalisé entre la face frontale inférieure 10 de la coquille 5 et la face frontale 20 du segment 15. Le même calcul du jeu radial « j » et les mêmes hypothèses que précédemment décrit s'applique à ce mode de réalisation également, l'écrasement élastique de la garniture 3 à l'interface avec la coquille 5 vient annuler le jeu « j » permettant au segment 15 de reprendre l'effort de serrage par un bouclage radial. On remarque sur la figure 3b que les segments 15 ont uniquement un rôle de bouclage radial, des fentes radiales 19 étant présentes entre les secteurs 2 et les segments 15 adjacents en position fermée du moule et que le moulage du pneu est effectué uniquement au niveau des garnitures 3. Cela permet de réduire les coûts de fabrication du moule en réalisant l'ensemble des supports à partir d'une seule pièce annulaire de fonderie par découpage, la perte de matière généré par découpage correspondant à la largeur de la fente 19. Il en est de même pour les segments 15 qui peuvent également être fabriqués par découpage à partir d'une seule pièce annulaire. Par ailleurs, les faces latérales des supports 2 et des segments 15 ne venant pas en contact en position de fermeture du moule, elles peuvent rester à l'état brut.

Dans les modes de réalisation ici décrits, les garnitures 3 sont réalisées en aluminium par une technique de fonderie et toutes les autres pièces du moule (supports 2, coquilles 5, couronnes 4, segments 15) sont réalisées en acier ou en fonte. Dans une variante, le support 2 peut être réalisé en un alliage d'aluminium ayant une résistance à la compression supérieure à celle du matériau de la garniture 3.

D'autres variantes et modes de réalisation de l'invention peuvent être envisagés sans sortir du cadre de ses revendications.

Ainsi, on peut utiliser en combinaison différentes solutions dans le cadre d'un seule moule de vulcanisation. On peut ainsi, réaliser un moule comportant un jeu radial entre la coquille et le support de garniture et un jeu circonférentiel entre les faces latérales de deux secteurs adjacents, les deux jeux étant calculés de manière à ce que, en position de fermeture du moule, la garniture soit déformée élastiquement et à ce que les efforts de serrage soient repris au niveau des supports des garnitures.

## Revendications

1. Moule de vulcanisation pour pneumatique apte à coopérer avec une presse de cuisson, ledit moule comportant deux coquilles (5) assurant chacune le moulage d'un flanc du pneumatique et une couronne (4) de secteurs (1) assurant le moulage de la bande de roulement du pneumatique, chaque secteur (1) comportant un support (2) et une garniture (3) de moulage située radialement à l'intérieur du support (2), couronne (4) dont les secteurs (1) sont, en position de fermeture du moule, tous en contact circonférentiel deux à deux via les garnitures (3) de moulage et en contact radial sur les coquilles (5) par les extrémités frontales (7) des garnitures (3) qui forment chacune une face de contact avec la coquille (5), lesdits supports (2) et garnitures (3) étant réalisés de manière à ce que, chaque support (2) soit apte à reprendre l'effort de serrage appliqué à la garniture (3) venant en contact avec la coquille (5) en position de fermeture du moule lorsque ledit effort de serrage au niveau de ladite face de contact dépasse un seuil donné, mais qui est inférieur au seuil de plasticité de la garniture (3), **caractérisé en ce que** un jeu (j) prédéterminé est prévu entre la face frontale inférieure de la coquille (5) et l'extrémité frontale inférieure du support (2) et **en ce que** ce jeu (j) est annulé en position de fermeture du moule.

2. Moule selon la revendication 1, **caractérisé en ce que** ledit support (2) comporte une extrémité frontale inférieure (9) située dans le prolongement de l'extrémité frontale (7) de la garniture (3), ladite extrémité frontale inférieure (9) étant réalisée de manière à venir en contact avec la face frontale inférieure (10) de la coquille (5) lorsque l'effort de serrage au niveau de ladite face de contact dépasse un seuil donné.

3. Moule selon l'une des revendications 1 ou 2, **caractérisé en ce que** le support (2) est réalisé en un matériau qui a une résistance à la compression supérieure à celle du matériau de la garniture (3).

4. Moule selon la revendication 1, **caractérisé en ce que** chaque support (2) comporte un segment (15) et des moyens de fixation (16) dudit segment sur ledit support.

5. Moule selon la revendication 4, **caractérisé en ce que** chaque segment (15) présente une face frontale inférieure (20) réalisée de manière à venir en contact avec la face frontale inférieure (10) de la coquille (5) lorsque l'effort de serrage au niveau de ladite face de contact dépasse un seuil donné.

6. Moule selon l'une des revendications 4 ou 5 **caractérisé en ce qu'**un jeu radial « j » est prévu entre la coquille (5) et l'extrémité frontale inférieure (9) du support (2) ou entre la coquille (5) et la face frontale inférieure (20) du segment (15), jeu qui est compris entre 0,05 et 0.1mm.

7. Procédé de vulcanisation de pneumatique à l'aide d'un moule selon l'une des revendications précédentes, ledit moule comportant deux coquilles (5) assurant chacune le moulage d'un flanc du pneumatique et une couronne de secteurs (1) assurant le moulage de la bande de roulement du pneumatique, chaque secteur (1) comportant un support (2) et une garniture (3) de moulage située radialement à l'intérieur du support (2), couronne dont les secteurs (1) sont, en position de fermeture du moule, tous en contact deux à deux dans le sens circonférentiel via les garnitures (3) de moulage et en contact sur les coquilles (5) par leurs extrémités frontales (7), ledit moule étant apte à coopérer avec une presse de cuisson pour passer d'une position d'ouverture du moule où les secteurs sont éloignés entre eux et éloignés des coquilles à ladite position de fermeture du moule, **caractérisé en ce que** la fermeture du moule est réalisée en deux étapes :
- une première étape de mise en contact de la face frontale (7) de la garniture (3) avec la face frontale de la coquille;
- une deuxième étape d'application de l'effort de serrage dans laquelle la garniture (3) est comprimée élastiquement et permet la reprise de l'effort par le support (2), un jeu (j) prédéterminé étant prévu entre la face frontale inférieure de la coquille (5) et l'extrémité frontale inférieure du support (2), ce jeu (j) étant annulé en position de fermeture du moule.

## Patentansprüche

1. Vulkanisierungsform für Luftreifen, die mit einer Heizpresse zusammenwirken kann, wobei die Form zwei Schalen (5), die je das Formen einer Flanke des Luftreifens gewährleisten, und einen Kranz (4) von Sektoren (1) aufweist, die das Formen des Laufstreifens des Luftreifens gewährleisten, wobei jeder Sektor (1) einen Träger (2) und einen Formeinsatz (3) aufweist, der sich radial innerhalb des Trägers (2) befindet, Kranz (4), dessen Sektoren (1) in der Schließstellung der Form alle paarweise über die Formeinsätze (3) in Umfangskontakt und durch die Stirnenden (7) der Einsätze (3), die je eine Kontaktseite mit der Schale (5) formen, in radialem Kontakt auf den Schalen (5) sind, wobei die Träger (2) und Einsätze (3) so hergestellt sind, dass jeder Träger (2) die Spannkraft aufnehmen kann, die auf den Einsatz (3), der in Schließstellung der Form mit der Schale (5) in Kontakt kommt, ausgeübt wird, wenn die Spannkraft im Bereich der Kontaktseite eine gegebene Schwelle überschreitet, die aber niedriger als die Plastizitätsschwelle des Einsatzes (3) ist, **dadurch gekennzeichnet, dass** ein vorbestimmtes Spiel (j) zwischen der unteren Stirnseite der Schale (5) und dem unteren Stirnende des Trägers (2) vorgesehen ist, und dass dieses Spiel (j) in der Schließstellung der Form aufgehoben wird.

2. Form nach Anspruch 1, **dadurch gekennzeichnet, dass** der Träger (2) ein unteres Stirnende (9) aufweist, das sich in der Verlängerung des Stirnendes (7) des Einsatzes (3) befindet, wobei das untere Stirnende (9) so hergestellt wird, dass es mit der unteren Stirnseite (10) der Schale (5) in Kontakt kommt, wenn die Spannkraft im Bereich der Kontaktseite eine gegebene Schwelle überschreitet.

3. Form nach einem der Ansprüche 1 oder 2, **dadurch gekennzeichnet, dass** der Träger (2) aus einem Material hergestellt wird, das eine höhere Druckfestigkeit als diejenige des Materials des Einsatzes (3) hat.

4. Form nach Anspruch 1, **dadurch gekennzeichnet, dass** jeder Träger (2) ein Segment (15) und Befestigungseinrichtungen (16) des Segments am Träger aufweist.

5. Form nach Anspruch 4, **dadurch gekennzeichnet, dass** jedes Segment (15) eine untere Stirnseite (20) aufweist, die so hergestellt wird, dass sie mit der unteren Stirnseite (10) der Schale (5) in Kontakt kommt, wenn die Spannkraft im Bereich der Kontaktseite eine gegebene Schwelle überschreitet.

6. Form nach einem der Ansprüche 4 oder 5, **dadurch gekennzeichnet, dass** ein radiales Spiel «j» zwischen der Schale (5) und dem unteren Stirnende (9) des Trägers (2) oder zwischen der Schale (5) und der unteren Stirnseite (20) des Segments (15) vorgesehen ist, Spiel, das zwischen 0,05 und 0,1mm liegt.

7. Verfahren zur Vulkanisierung eines Luftreifens mit Hilfe einer Form nach einem der vorhergehenden Ansprüche, wobei die Form zwei Schalen (5), die je das Formen einer Flanke des Luftreifens gewährleisten, und einen Kranz von Sektoren (1) aufweist, die das Formen des Laufstreifens des Luftreifens gewährleisten, wobei jeder Sektor (1) einen Träger (2) und einen Formeinsatz (3) aufweist, der sich radial innerhalb des Trägers (2) befindet, Kranz, dessen Sektoren (1) in der Schließstellung der Form alle paarweise über die Formeinsätze (3) in Umfangsrichtung in Kontakt und durch ihre Stirnenden (7) auf den Schalen (5) in Kontakt sind, wobei die Form mit einer Heizpresse zusammenwirken kann, um von einer Öffnungsstellung der Form, in der die Sektoren voneinander und von den Schalen entfernt sind, in die Schließstellung der Form überzugehen, **dadurch gekennzeichnet, dass** das Schließen der Form in zwei Schritten durchgeführt wird:
- einem ersten Schritt des Inkontaktbringens der Stirnseite (7) des Einsatzes (3) mit der Stirnseite der Schale;
- einem zweiten Schritt des Anwendens der Spannkraft, in dem der Einsatz (3) elastisch zusammengedrückt wird und die Aufnahme der Kraft durch den Träger (2) erlaubt, wobei ein vorbestimmtes Spiel (j) zwischen der unteren Stirnseite der Schale (5) und dem unteren Stirnende des Trägers (2) vorgesehen ist, wobei dieses Spiel (j) in der Schließstellung der Form aufgehoben wird.

## Claims

1. Tyre vulcanizing mould able to cooperate with a curing press, said mould comprising two shells (5) each one moulding a sidewall of the tyre and a ring (4) of sectors (1) for moulding the tread of the tyre, each sector (1) comprising a support (2) and a moulding lining (3) situated radially on the inside of the support (2), in which ring (4) the sectors (1), when the mould is in the closed position, are all in circumferential contact one with the next via the moulding linings (3) and in radial contact on the shells (5) via the front ends (7) of the linings (3) each of which forms a face for contact with the shell (5), said supports (2) and linings (3) being produced in such a way that each support (2) is able to take up the clamping force applied to the lining (3) coming into contact with the shell (5) when the mould is in the closed position when said clamping force at said contact face exceeds a given threshold that is lower than the plastic threshold of the lining (3), **characterized in that** a predetermined clearance (j) is provided between the lower front face of the shell (5) and the lower front end of the support (2), and **in that** this clearance (j) is cancelled out when the mould is in the closed position.

2. Mould according to Claim 1, **characterized in that** said support (2) comprises a lower front end (9) situated in the extension of the front end (7) of the lining (3), said lower front end (9) being produced in such a way that it comes into contact with the lower front face (10) of the shell (5) when the clamping force at said contact face exceeds a given threshold.

3. Mould according to one of Claims 1 and 2, **characterized in that** the support (2) is produced from a material with a compression strength greater than that of the material of the lining (3).

4. Mould according to Claim 1, **characterized in that** each support (2) comprises a segment (15) and means (16) for affixing said segment to said support.

5. Mould according to Claim 4, **characterized in that** each segment (15) has a lower front face (20) produced in such a manner as to come into contact with the lower front face (10) of the shell (5) when the clamping force at said contact face exceeds a given threshold.

6. Mould according to one of the claims 4 or 5, **characterized in that** a radial clearance "j" is provided between the shell (5) and the lower front end (9) of the support (2), or between the shell (5) and the lower front face (20) of the segment (15), which clearance is between 0.05 and 0.1 mm.

7. Tyre vulcanizing method using a mould according to one of the preceding claims, said mould comprising two shells (5) each one moulding a sidewall of the tyre and a ring of sectors (1) for moulding the tread of the tyre, each sector (1) comprising a support (2) and a moulding lining (3) situated radially on the inside of the support (2), in which ring the sectors (1), when the mould is in the closed position, are all in circumferential contact one with the next in the circumferential direction via the moulding linings (3) and in contact on the shells (5) via their front ends (7), said mould being able to collaborate with a curing press in order to move from a position in which the mould is open, in which the sectors are separated from one another and separated from the shells, to said position in which the mould is closed, **characterized in that** closure of the mould is achieved in two steps:
- a first step of placing the front face (7) of the lining (3) in contact with the front face of the shell;
- a second step of applying the clamping force, in which the lining (3) is elastically compressed and allows the force to be taken up by the support (2), a predetermined clearance (j) being provided between the lower front face of the shell (5) and the lower front end of the support (2), this clearance (j) being cancelled out when the mould is in the closed position.
